**Europäisches Patentamt**

**European Patent Office**

**Office européen des brevets**

(19)

(11) Veröffentlichungsnummer : **0 330 042 B1**

(12) **EUROPÄISCHE PATENTSCHRIFT**

(45) Veröffentlichungstag der Patentschrift :
**12.08.92 Patentblatt 92/33**

(21) Anmeldenummer : **89102432.5**

(22) Anmeldetag : **13.02.89**

(51) Int. Cl.$^5$ : **B41L 1/22,** G09B 3/04

(54) **Aufzeichnungsträger.**

(30) Priorität : **22.02.88 CH 663/88**

(43) Veröffentlichungstag der Anmeldung :
**30.08.89 Patentblatt 89/35**

(45) Bekanntmachung des Hinweises auf die
Patenterteilung :
**12.08.92 Patentblatt 92/33**

(84) Benannte Vertragsstaaten :
**AT BE CH DE ES FR GB GR IT LI LU NL SE**

(56) Entgegenhaltungen :
**WO-A-87/03990**
**DE-A- 2 531 331**
**FR-A- 1 459 401**
**US-A- 4 248 919**
**DERWENT ABSTRACT NUMMER 88-126491**
**(18. WOCHE) & ZA-A-8705198**

(73) Patentinhaber : **WÖRNDLI, Gerhard A.**
**Lerchenbühlstrasse 14**
**CH-6045 Meggen (CH)**

(72) Erfinder : **WÖRNDLI, Gerhard A.**
**Lerchenbühlstrasse 14**
**CH-6045 Meggen (CH)**

(74) Vertreter : **Troesch, Jacques J., Dr. sc. nat. et
al**
**Troesch Scheidegger Werner AG**
**Siewerdtstrasse 95**
**CH-8050 Zürich (CH)**

Jouve, 18, rue Saint-Denis, 75001 PARIS

## Beschreibung

Die vorliegende Erfindung betrifft einen Aufzeichnungsträger nach dem Oberbegriff von Anspruch 1.

Aus der CH-PS-611 061 (DE-A-25 31 331) sind Aufgabenblätter bekannt geworden mit zwei entlang drei Berandungskanten miteinander verbundenen Blättern. Dazwischen ist ein Zwischenblatt, ein Kohlepapier, vorgesehen, welches im vierten Kantenbereich der verbundenen Blätter herausziehbar ist. Auf derartigen Aufgabenblättern wird auf der einen der sich am Zwischenblatt gegenüberliegenden Blattseiten die richtige Lösung einer gestellten Aufgabe aufgedruckt, bei eingelegtem Zwischenblatt von aussen nicht erkenntlich. Ein Schüler löst die gestellte Aufgabe auf einem eigens dazu vorgesehenen Lösungsfeld, wobei seine Aufzeichnung auf besagte, mit der richtigen Lösung bedruckte Blattseite durchkopiert wird. Danach entfernt der Schüler das Zwischenblatt, wodurch einerseits die richtige Lösung durch das eine, klarsichtig ausgebildete Blatt erkenntlich wird, anderseits aber eine Korrektur seiner bereits eingetragenen Lösung wie folgt verunmöglicht wird:

Ein Wiedereinschieben des den Aufzeichnungskontrast bewirkenden Zwischenblattes, hier des Kohlepapiers, wird dadurch verunmöglicht, dass letzteres an der Ausziehöffnung um die Kante des einen der Blätter umgelegt ist und in dieser Position durch einen Umlenkfalz gehaltert ist. Es kann somit nur um die Kante des einen dieser Blätter herum ausgezogen werden. Ein Wiedereinschieben des Zwischenblattes unter den Umlenkfalz und um die Kante des einen Blattes herum ist unmöglich.

Dieser Umlenkfalz ist in der Fertigung relativ aufwendig. Zudem müssen Vorkehrungen an der Kante des einen der Blätter, um welche das Zwischenblatt herum ausgezogen wird, vorgesehen werden, die ein Ausreissen dieser Kante bei Ausziehen des Zwischenblattes verhindern. Das Vorsehen der Umlenkfalze, zusammen mit einer Verstärkung der erwähnten Kante, ergibt eine unerwünschte lokale Verdickung des Aufzeichnungsträgers, was insbesondere bei Binden einer Vielzahl derartiger Träger zu einem Buch nachteilig ist.

Aus der US-A-4 248 919 ist es weiter bekannt, als Aufzeichnungsträger zwei Blätter vorzusehen, mit einer Zwischenblattanordnung, die, bei Aufzeichnen auf das eine der Blätter, die Aufzeichnung auf eines der sich gegenüberliegenden Blätter abbildet. Die anfänglich entlang wesentlicher Randabschnitte erstellte Verbindung der Blätter wird nach Aufzeichnen gelöst, derart, dass die Blätter nurmehr an einer Seite verbunden bleiben. Durch Aufklappen der Blätter wird ein Abtrennen der Zwischenblattanordnung ermöglicht, nach deren Entfernen die Blätter aufeinander rückgeklappt werden. Eine Verklebung der neuen, unmittelbar aneinanderliegenden Seiten der Blätter wird nun erstellt durch Haftwirksamwerden einer Klebeschicht am einen der Blätter nach deren Freigabe durch die Zwischenblattanordnung.

Dieses Vorgehen ist insofern nachteilig, als dass nicht allein durch die Entfernung des Zwischenblattes die haftende Verbindung der Blätter erstellt wird, sondern dass die Blätter aus der hochgeklappten Lage sorgfältig aufeinander rückgelegt werden müssen. Weiter ist ein abschnittsweises Entfernen der Zwischenblattanordnung nicht möglich, derart, dass eine Aufzeichnungsverbindung nur abschnittsweise erfolgte und Aufzeichnungen auf übrigen Bereichen des Trägers weiterhin möglich wären, wie dies gemäss der CH-PS-611 061 möglich ist.

Aus der internationalen Anmeldung PCT/CH85/00177, entsprechend der Veröffentlichung WO87/03990 desselben Anmelders, ist ein Aufzeichnungsträger der genannten Art bekannt geworden. Der Haftbereich wird an mindestens einer der beiden sich gegenüberliegenden Seiten der übereinander verbundenen Blätter vorgesehen, derart, dass nach Entfernen der Zwischenblattanordnung die schwer lösbare Verbindung dieser beiden Blätter erstellt wird, womit ein Wiedereinschieben der für die Erzeugung des Aufzeichnungskontrasts notwendigen Zwischenblattanordnung verunmöglicht wird. Damit wird sichergestellt, dass eine vormals getätigte Aufzeichnung nach Entfernen der Zwischenblattanordnung nicht ergänzt, korrigiert etc. werden kann. Der Aufzeichnungskontrast wird dabei durch den Aufzeichnungsdruck, wie mittels eines Kugelschreibers, auf eines der Blätter von der hier den Aufzeichnungskontrast bewirkenden Zwischenblattanordnung auf das andere der Blätter durchgedrückt.

Dabei besteht folgender Nachteil: Bereiche des Aufzeichnungsträgers, welche mit dem erwähnten Haftbereich versehen sind, können praktisch nicht zur Aufzeichnung verwendet werden, da der vorgesehene Haftbereich eine zufriedenstellende Uebernahme des Aufzeichnungskontrastes weitgehend verhindert, d.h. den Aufzeichnungsdruck dämpft. Somit müssen am Aufzeichnungsträger klar definierte Haftbereiche und klar definierte, von letzteren getrennte Aufzeichnungsbereiche vorgesehen werden. Dies zieht nun den weiteren Nachteil nach sich, dass in der Herstellung ein präzises Auslegen der erwähnten Haftbereiche erforderlich ist, d.h. es müssen die erwähnten Haftbereiche lokal begrenzt und gezielt an mindestens einem der am Aufzeichnungsträger übereinander verbundenen Blätter appliziert werden, und zwar möglichst ohne dass sich Haftbereiche und Bereiche, in denen eine Aufzeichnungskontrast-bewirkende Wirkverbindung besteht, überlappen.

Die vorliegende Erfindung bezweckt, ausgehend von einem Aufzeichnungsträger letztgenannter Art, dessen Nachteile zu beheben.

Zu diesem Zweck zeichnet sich der Aufzeichnungsträger der obgenannten Art nach dem Kennzeichen von

2

Anspruch 1 aus.

Dadurch, dass nun die Haftschicht in einem Bereich in der einen Zwischenkammer liegt, die Wirkverbindung, die den Aufzeichnungskontrast bewirkt, in einem Bereich der anderen Zwischenkammer, welcher Bereich sich mindestens teilweise mit dem Haftschichtbereich überdeckt, wird nämlich erreicht, dass die Aufzeichnungskontrasterzeugung durch den vorgesehenen Haftbereich nicht mehr beeinträchtigt werden kann, indem die für den Aufzeichnungskontrast wesentliche Zwischenkammer von derjenigen mit der Haftschicht getrennt ist. Damit kann in der Herstellung der Klebebereich ohne Rücksicht auf nachmals aufzunehmende Aufzeichnungen hergestellt werden.

Nun kann aber ein weiteres Problem dahingehend entstehen, dass, wenn beispielsweise mit einem Kugelschreiber geschrieben wird, ein erster Aufzeichnungskontrast auf der entsprechenden Blattaussenseite der einen Zwischenkammer entsteht und, bewirkt durch die erwähnte Wirkverbindung, ein zweiter Aufzeichnungskontrast auf der innen liegenden Seite des genannten Blattes. Dies hat den Nachteil, dass auch nach Entfernung der Zwischenblattanordnung möglicherweise eine weitere Aufzeichnung erfolgen kann und es nur schwer erkennbar ist, ob sie legitimerweise vorgängig aufgebracht wurde oder nicht legitimerweise, wie den weiteren Erläuterungen zu entnehmen sein wird, nach Entfernung der Zwischenblattanordnung.

Dieses Problem kann nun durch Vorgehen nach dem Wortlaut von Anspruch 2 gelöst werden.

Es wird mithin das erwähnte Problem dadurch gelöst, dass man verhindert, dass von aussen ein relevanter Aufzeichnungskontrast auf das erwähnte Blatt der anderen Zwischenkammer überhaupt aufgebracht werden kann. Es verbleibt, nach Entfernen der Zwischenblattanordnung, nur der von der Wirkverbindung erzeugte Aufzeichnungskontrast und kann klarerweise dann nicht mehr verfälscht werden.

Bei gewissen Einsätzen derartiger Aufzeichnungsträger, beispielsweise zur Lösung von Aufgaben z.B. im Fernunterricht, wird weiter vorgeschlagen, Information nach dem Wortlaut von Anspruch 3 vorzusehen. Dadurch wird erreicht, dass erst nach Entfernen der Zwischenblattanordnung und somit Aufheben der den Aufzeichnungskontrast bewirkenden Wirkverbindung ein Verwender die vorab vorgesehene Information einsehen kann, beispielsweise die Lösung der vorgängig gelösten Aufgabe erblicken kann.

Dabei wird weiter vorgeschlagen, nach dem Wortlaut von Anspruch 4 vorzugehen, wodurch erreicht wird, dass nach Entfernen der Zwischenblattanordnung und damit Auflösung der genannten, den Aufzeichnungskontrast bewirkenden Wirkverbindung eine Aufzeichnung nicht mehr geändert werden kann, beispielsweise nachdem der Verwender, nach Entfernen der Zwischenblattanordnung, die Lösung einer gestellten Aufgabe erblickt hat.

Eine bevorzugte Kombination von vorab vorgesehener Information und Sperrung des Wiedereinschiebens der Zwischenblattanordnung ergibt sich nach dem Wortlaut von Anspruch 5.

Um nun weiter zu verhindern, dass der Verwender vorab vorgesehene Information vor Anbringen einer Aufzeichnung überhaupt einsehen kann, wird vorgeschlagen, nach dem Wortlaut von Anspruch 6 vorzugehen. Dadurch wird erreicht, dass der Verwender die genannte, vorab vorgesehene Information nicht durch Anheben der beiden Blätter und der Zwischenblattanordnung, d.h. durch Oeffnen der entsprechenden Zwischenkammer, vor deren Entfernen einsehen kann, sondern erst, nachdem die Zwischenblattanordnung, einerseits die Aufzeichnungskontrast-bewirkende Wirkverbindung aufhebend, anderseits den Haftbereich aktivierend, entfernt worden ist.

Um dabei einen Auszug der Zwischenblattanordnung zu erleichtern, unter Berücksichtigung, dass dann der zugreifbare Rand dieser Zwischenblattanordnung eigentlich an einem der übereinander verbundenen Blätter befestigt, vorzugsweise verklebt ist, wird vorgeschlagen, nach dem Wortlaut von Anspruch 7 vorzugehen.

Dabei wird bevorzugterweise gemäss Anspruch 8 die Funktion des erwähnten Ausziehorgans einem an der Zwischenblattanordnung vorgesehenen, Kontrast bewirkenden Blatt, vorzugsweise einem Kohlepapier, übertragen. Die Zwischenblattanordnung liegt dann zwischen den an drei Kanten übereinander verbundenen Blättern. Sie ist einerseits am vierten Rand mit einem der Blätter verbunden, erstreckt sich zwischen den Blättern durch, geht an dem dem genannten vierten Rand gegenüberliegenden Bereich in ein den Kontrast bewirkendes Blatt über, das sich, zurück, zum offenen Rand hin erstreckt, wo es ergriffen werden kann und mit der gesamten Zwischenblattanordnung ausgezogen werden kann, wobei wie vorzugsweise nach Anspruch 16 vorgegangen wird.

Eine weitere Möglichkeit, die Zwischenblattanordnung zwischen den übereinander verbundenen Blättern auszuziehen, ergibt sich nach dem Wortlaut von Anspruch 9, wobei dann vorzugsweise vorab vorgesehene Information entsprechend dem Wortlaut von Anspruch 10 angeordnet wird, womit vor Ausziehen der Zwischenblattanordnung, entsprechend der Auflösung der erwähnten, den Aufzeichnungskontrast bewirkenden Wirkverbindung und der Aktivierung des vorgesehenen Haftbereiches, ein Einsehen der erwähnten Information ebenfalls verunmöglicht wird.

Mit einem erfindungsgemässen Aufzeichnungsträger der erwähnten Art kann ein Bogen für Fernunterricht, Prüfungen etc. realisiert werden, auf welchem ein Schüler erst die Aufgabe, allenfalls auch auf dem Bo-

EP 0 330 042 B1

gen, lesen kann, sie dann darauf lösen kann und nach Entfernung der Zwischenblattanordnung die Musterlösung der eben gelösten Aufgabe einsehen kann, ohne dass aber darnach seine Aufzeichnungen auf dem Bogen geändert werden könnten.

Wie eingangs erwähnt, ergibt die erfindungsgemässe Trennung, einerseits von Aufzeichnungskontrast bewirkender Wirkverbindung in der anderen Zwischenkammer, anderseits von bereitgestelltem Haftbereich in der einen Zwischenkammer, um nach Auszug der Zwischenblattanordnung die beiden übereinander verbundenen Blätter praktisch unlösbar zu verbinden, die Möglichkeit, den vorgesehenen Haftbereich unabhängig von vorzusehenden Aufzeichnungsbereichen anzubringen.

Damit ergibt sich die bevorzugte Ausführungsvariante gemäss Anspruch 11, welche durch eine kontinuierliche Beschichtung, vollflächig oder in Streifen, im Herstellungsverfahren ausserordentlich preisgünstig hergestellt werden kann.

Dem Wortlaut von Anspruch 12 folgend, wird weiter vorgeschlagen, praktisch einen "doppelten" Aufzeichnungsträger zu schaffen, mit drei übereinander verbundenen Blättern, bei dem das mittlere auf seinen beiden Seiten und bevorzugterweise wiederum kontinuierlich aufgebracht, den Haftbereich aufweist.

Um bei den erwähnten Ausführungsvarianten sicherzustellen, dass der vorgesehene Haftbereich bzw. Klebebereich an der Zwischenblattanordnung nicht haftet und somit deren Ausziehen nicht behindert, wird weiter vorgeschlagen, nach dem Wortlaut von Anspruch 13 vorzugehen.

Dabei wird mit der Zwischenblattanordnung, dem Wortlaut von Anspruch 14 folgend, eine weitere Aufgabe bevorzugterweise gelöst, nämlich eine Schreibunterlage zu schaffen, was nun durch die erfindungsgemäss lokale Trennung der Aufzeichnungskontrastfunktion und der latent bereitgestellten Haftfunktion ermöglicht wird.

In Anbetracht der Tatsache, dass mit der erfindungsgemässen Trennung der erwähnten Funktionen der Haftbereich kontinuierlich auf einem der erwähnten übereinander liegenden Blätter aufgebracht werden kann, wird weiter gemäss Anspruch 15 vorgeschlagen, diesen vorgesehenen Haftbereich gerade auch für das Verbinden der beiden oder allenfalls der drei übereinander verbundenen Blätter einzusetzen, indem die übereinander verbundenen Blätter, ausgenommen der Tasche für die Zwischenblattanordnung, mit diesem Klebebereich verbunden werden: Das eine der Blätter wird vollständig oder streifenförmig mit Klebstoff beschichtet und das andere, damit zu verbindende, nach Einlegen der Zwischenblattanordnung, in den Randzonen mit dem beschichteten Blatt bleibend verklebt.

Die Erfindung wird anschliessend beispielsweise anhand von Figuren erläutert.

Darin zeigen:

Fig. 1 schematisch einen Längsschnitt durch einen erfindungsgemässen Aufzeichnungsträger,

Fig. 2 in Darstellung analog zu Fig. 1 eine weitere Ausführungsvariante des erfindungsgemässen Aufzeichnungsträgers,

Fig. 3 eine schematische, perspektivische Ansicht eines erfindungsgemässen Aufzeichnungsträgers,

Fig. 4a bis 4c einen erfindungsgemässen Aufzeichnungsträger in Aufsicht, mit sukzessiv entfernter Zwischenblattanordnung,

Fig. 5 schematisch eine weitere Ausführungsform eines erfindungsgemässen Aufzeichnungsträgers,

Fig. 6 schematisch eine weitere Ausführungsvariante eines erfindungsgemässen Aufzeichnungsträgers,

Fig. 7 eine schematische Darstellung einer weiteren Variante des erfindungsgemässen Aufzeichnungsträgers,

Fig. 8 eine perspektivische, teilweise aufgerissene Darstellung des Aufzeichnungsträgers gemäss Fig. 7.

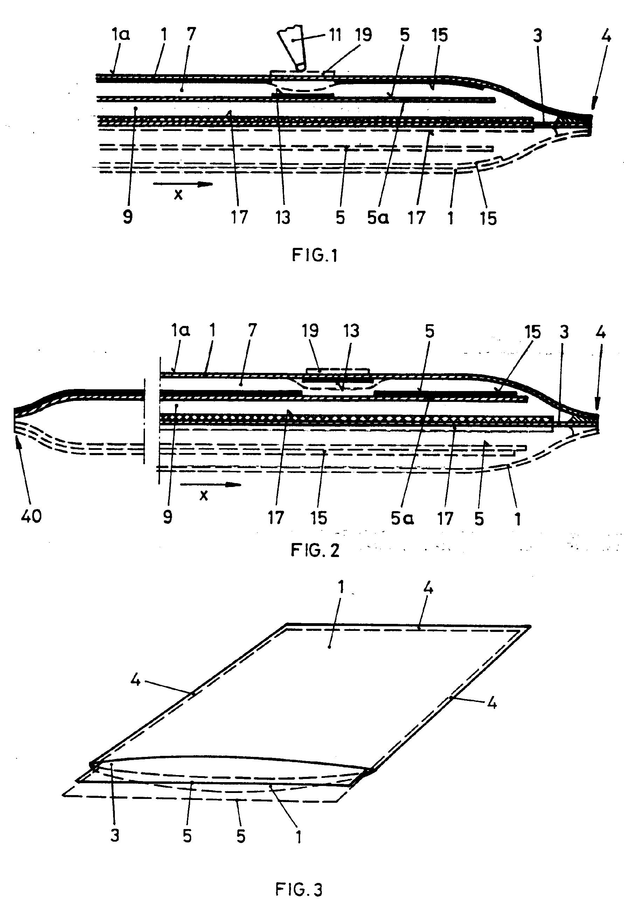

Gemäss Fig. 1 umfasst ein erfindungsgemässer Aufzeichnungsträger zwei Blätter, ein Oberblatt 1 und ein Unterblatt 3. Diese beiden Blätter sind, wie bei 4 dargestellt, zur Bildung einer Tasche übereinander verbunden, wie randständig miteinander verklebt. Zwischen den beiden Blättern 1 und 3 liegt eine Zwischenblattanordnung 5. Die Zwischenblattanordnung 5 trennt die durch die beiden Blätter 1 und 3 gebildete Tasche in zwei Bereiche 7 und 9. Im einen Bereich 7 steht die Zwischenblattanordnung 5 mit dem ihr dort zugewandten Blatt, gemäss den Fig. 1 und 2, dem Blatt 1, in einer Wirkverbindung, derart, dass bei einer Aufzeichnungshandlung, wie mit einem Kugelschreiber 11 dargestellt, gemäss Fig. 1 ein Aufzeichnungskontrast 13 auf der Zwischenblattanordnung 5 oder, wie bei Fig. 2 dargestellt, ein Aufzeichnungskontrast 13 auf die der Zwischenblattanordnung 5 zugekehrte Seite des Blattes 1 aufgetragen wird. Das Auftragen des Aufzeichnungskontrastes 13 auf die Zwischenblattanordnung 5 gemäss Fig. 1 geschieht beispielsweise dadurch, dass die dieser Anordnung 5 zugewandte Seite des Oberblattes 1, wie schematisch bei 15 dargestellt, karbonisiert ist, derart, dass aufgrund des Aufzeichnungsdruckes, wie bewirkt durch den Kugelschreiber 11, der Aufzeichnungskontrast in Form der Karbonisierung 13 auf die Zwischenblattanordnung 5 aufgedrückt wird.

Soll der Aufzeichnungskontrast, gemäss Fig. 2, auf dem Blatt 1 übernommen werden, so ist beispielsweise die diesem Blatt 1 zugekehrte Seite der Zwischenblattanordnung 5 karbonisiert.

Wie erläutert worden ist, ist somit in der Zwischenkammer 7 eine Wirkverbindung vorgesehen, welche den Aufzeichnungskontrast 13 bewirkt. Die zweite Zwischenkammer 9, von der ersten, 7, durch die Zwischenblattanordnung 5 klar getrennt, weist einen Haftbereich 17 auf, wie dargestellt bevorzugterweise kontinuierlich durchgehend oder streifenförmig entlang des Blattes 3 als Klebebereich ausgebildet. Der Klebebereich 17 haftet wohl an der der Zwischenblattanordnung 5 zugekehrten Seite des Blattes 3, nicht jedoch an der Zwischenblattanordnung 5, wozu mindestens die entsprechende Seite 5a ausgelegt ist, entsprechend dem gewählten Klebstoff, mit dem die Schicht 17 ausgebildet ist, dazu vorzugsweise silikonisiert ist. Wird nun, gemäss Fig. 1, die Zwischenblattanordnung 5 nach Aufbringen einer Aufzeichnung entfernt, so verbleibt in diesem Ausführungsbeispiel der Aufzeichnungskontrast 13 auf der Zwischenblattanordnung und kann darnach auf letzterer wahrgenommen, wie gelesen, werden. Gleichzeitig wird aber die Trennung zwischen den Zwischenkammern 7 und 9 aufgehoben, es tritt die Klebschicht 17 nun auch mit dem Oberblatt 1 in Kontakt, womit die beiden Blätter 1 und 3, zerstörungsfrei praktisch nicht lösbar, verklebt werden. Während bei der Ausführungsvariante gemäss Fig. 1 nach Ausziehen der Zwischenblattanordnung 5, wie erwähnt, der Aufzeichnungskontrast auf der ausgezogenen Zwischenblattanordnung 5 lesbar, bzw. erkennbar ist, verbleibt er bei der Ausführungsvariante gemäss Fig. 2 auf den nach Ausziehen der Zwischenblattanordnung 5 ebenfalls zerstörungsfrei praktisch nicht lösbar verklebten Blättern 1, 3, d.h. eigentlich, und wie dort bei 13 eingetragen, am Blatt 1.

Die Verklebung der beiden Blätter 1 und 3 soll in jedem Fall bewirken, dass nach Ausziehen der Zwischenblattanordnung 5 eine nachmalige Aufzeichnung ohne weiteres als solche erkenntlich wird. Bei beiden Varianten ist die vorerwähnte Wirkverbindung in der Zwischenkammer 7, zum Bewirken der Aufzeichnungskontrastübernahme, nach Ausziehen der Zwischenblattanordnung 5, nicht mehr wirksam. Somit verbleibt, wie erwähnt, der übernommene Aufzeichnungskontrast 13 beim Ausführungsbeispiel gemäss Fig. 1 auf der ausgezogenen Zwischenblattanordnung und ist dort ohne weiteres als solcher erkennbar, denn ein z.B. durch Karbonisierung bewirkter Aufzeichnungskontrast auf der Zwischenblattanordnung 5 kann sehr wohl von einem nachmals mit einem herkömmlichen Schreibutensil vorgenommenen Aufzeichnen unterschieden werden.

Allerdings ist eine unzulässige nachmalige Aenderung des auf der Zwischenblattanordnung 5 aufgezeichneten Kontrastes dann noch möglich, wenn der Benutzerperson beispielsweise ein Karbonpapier zur Verfügung steht, das denselben Aufzeichnungskontrast bewirkt wie die Karbonisierung 15 an Blatt 1. Auf der andern Seite ermöglicht diese Ausführungsvariante ein unmittelbares klares Erkennen des Aufzeichnungskontrastes an der ausgezogenen Zwischenblattanordnung 5, da sie lokal, eben durch dieses Ausziehen, von einem nachmals von aussen auf das Blatt 1, wie mit dem Kugelschreiber 11, aufgebrachten Aufzeichnungskontrast 19 getrennt wird.

Bei der Ausführungsvariante gemäss Fig. 2 verbleibt der Aufzeichnungskontrast 13 auf dem Blatt 1, welches nach Ausziehen der Zwischenblattanordnung 5 mit dem Blatt 3 unlösbar verklebt wird. Somit ist eine nachmalige Aenderung des Aufzeichnungskontrastes 13 nicht mehr möglich, denn nach Ausziehen der Zwischenblattanordnung 5 ist die erwähnte Wirkverbindung zur Erzeugung des Aufzeichnungskontrastes aufgehoben. Allerdings ist es in diesem Fall etwas schwerer, den wie durch den Kugelschreiber 11 gemäss Fig. 1 aufgebrachten, äusseren Aufzeichnungskontrast 19 an Blatt 1, von dem von innen her aufgebrachten Aufzeichnungskontrast 13 zu trennen. Dieses Problem wird hier vorzugsweise dadurch behoben, dass als Aufzeichnungskontrast 13, und somit für die Karbonisierung 15 an der Zwischenblattanordnung 5, eine Farbe gewählt wird, die von der Aufzeichnungsfarbe üblicher Schreibutensilien abweicht, beispielsweise rot oder grün ist. Damit wird es dann in jedem Fall möglich zu unterscheiden, wo von innen ein Aufzeichnungskontrast 13 bewirkt wurde und wo, praktisch unerlaubterweise, nach Entfernen der Zwischenblattanordnung lediglich der äussere Aufzeichnungskontrast 19 aufgebracht wurde. Eine weitere Massnahme, die hinzukommend oder für sich allein zur Lösung dieses Erkennungsproblems getroffen werden kann, ist, die Oberseite 1a des Blattes 1 derart auszubilden, dass sie mit herkömmlichen Schreibutensilien gar nicht beschriftbar ist, d.h. keinen Kontrast 19 aufnimmt, sie also beispielsweise kunststoffzubeschichten oder zu silikonisieren. Dabei muss aber bei der Ausführungsvariante von Fig. 2 immer sichergestellt sein, dass das Blatt 1 derart durchscheinend bleibt, dass der Kontrast 13, nach Verkleben der Blätter 1 und 3, ohne weiteres von aussen klar ersichtlich ist.

Wie in beiden Fig. 1 und 2 dargestellt, ist das Anbringen des Klebebereiches 17 davon völlig unabhängig, wo auf dem Aufzeichnungsträger eine Aufzeichnung aufgebracht werden soll. Bevorzugterweise wird das Unterblatt 3 in seiner Längsausdehnung x kontinuierlich mit dem Bereich 17, auch in Querausdehnung ganz oder streifenförmig, versehen. Wie in beiden Figuren weiter gestrichelt dargestellt, wird eine optimale Material- und Platzausnützung dadurch erzielt, dass der Aufzeichnungsträger als Doppelaufzeichnungsträger ausgebildet wird. Hierzu sind beidseitig des nun als mittleres Blatt wirkenden Blattes 3 je ein äusseres Blatt 1 aufgeklebt, und es ist beidseits des mittleren Blattes 3 je eine Zwischenblattanordnung 5 vorgesehen. Das mittlere Blatt 3 wird nun zur Bildung beider Klebebereiche 17 bevorzugterweise beidseitig in Längsrichtung kontinuierlich, in Querrichtung auch ganz oder streifenförmig, mit der Klebeschicht 17 beschichtet.

In Fig. 3 ist, perspektivisch, der erfindungsgemässe Aufzeichnungsträger dargestellt, wobei die zwei bzw.

drei Blätter 1 und 3 entlang dreier Randbereiche 4 verklebt sind und ein oder zwei Zwischenblattanordnungen 5 dazwischen angeordnet sind.

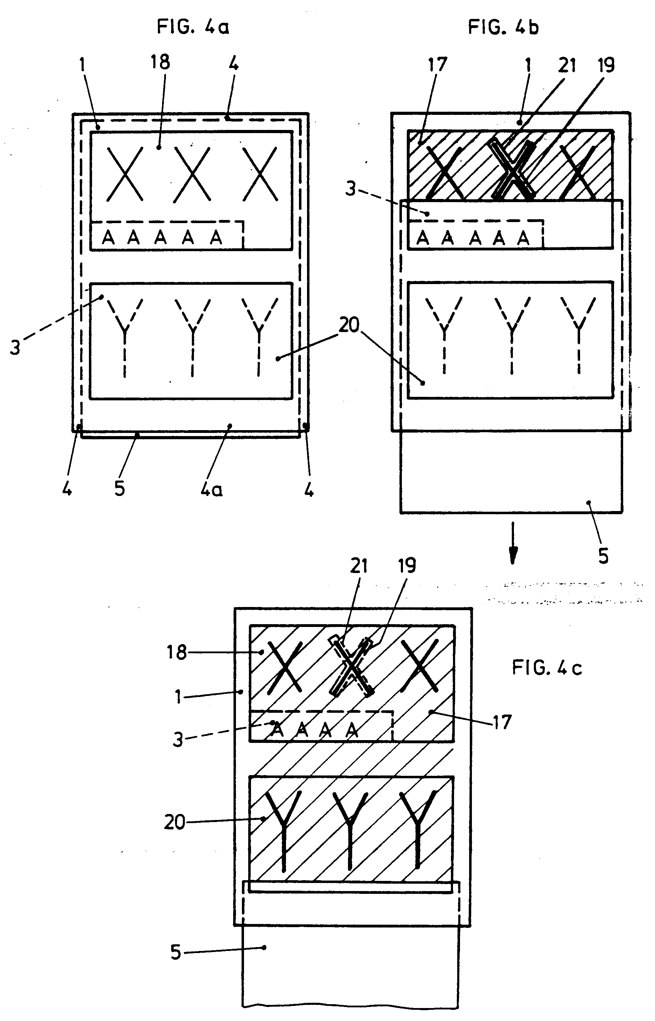

In Fig. 4 ist, in Aufsicht, ein erfindungsgemässer Aufzeichnungsträger dargestellt, aufgebaut wie in Fig. 2 im Querschnitt dargestellt, als Einfach- oder Doppelaufzeichnungsträger. Der hier dargestellte Aufzeichnungsträger sei als Lösungsblatt für gestellte Aufgaben, wie für den Unterricht, ausgelegt. Gemäss Fig. 4a liegt die Zwischenblattanordnung 5 zwischen den übereinander verbundenen Blättern 1 und 3. Diese sind entlang der Randpartien 4 miteinander verklebt, wobei bevorzugterweise die gemäss Fig. 2 in Längs- und/oder Querrichtung durchgehende Klebeschicht 17 auch für das Verkleben der Blätter 1, 3 randständig ausgenützt wird. Beispielsweise auf dem Blatt 1 markiert, ist ein Beschriftungsbereich 18 vorgesehen, auf welchem der Anwender schreiben resp. zeichnen soll. Entsprechend ist, von aussen jederzeit erkennbar, beispielsweise auf dem Blatt 1, wie bei A dargestellt, eine Aufgabe abgedruckt. Der Anwender notiert nun beispielsweise die Lösung im hierzu vorgesehenen Beschriftungsbereich 18, was mit XXX angedeutet ist. Darnach zieht er, wie in den Fig. 4b und 4c dargestellt, die Zwischenblattanordnung 5 zwischen den im Randbereich 4a nicht miteinander verbundenen Blättern 1 und 3 hervor, und es tritt nun, wie in diesen Darstellungen wiederum mit 17 angedeutet, mit zunehmendem Mass des Auszuges der Zwischenblattanordnung 5, die Klebeschicht 17 an Blatt 3 mit dem Blatt 1 in Kontakt und verklebt diejenigen Bereiche dieser Blätter, zwischen welchen die Zwischenblattanordnung 5 bereits ausgezogen ist. Somit kann die Zwischenblattanordnung 5 keinesfalls mehr zwischen die Blätter 1 und 3 zurückgeschoben werden. Damit kann aber auch die Aufzeichnung XXX, nachdem die Zwischenblattanordnung 5, wie in Fig. 4b dargestellt, entfernt worden ist, nicht mehr geändert werden. Wie bei 21 dargestellt, ist bei Wahl eines andersfarbigen, von innen aufgebrachten Aufzeichnungskontrastes 13 gemäss Fig. 2 diese Aufzeichnungskontrastfarbe klar bezüglich des von aussen aufgebrachten Kontrastes 19 erkenntlich.

Nun ist auf einem der Blätter 1 bzw. 3, bevorzugterweise auf dem Blatt 3, Vorab-Information vorgesehen, wie die Lösung YYY der gestellten Aufgabe entsprechend AAA abgedruckt. Wenn der Anwender nun gemäss Fig. 4c die Zwischenblattanordnung 5 zwischen den Blättern 1 und 3 entsprechend weit ausgezogen hat, erblickt er die Lösung YYY der vormals gelösten Aufgabe, kann seine eigene Lösung XXX damit vergleichen, kann sie jedoch nicht mehr korrigieren. Sinnvollerweise werden dabei Bereiche 20 mit Vorab-Information, wie den Aufgabenlösungen YYY, so angeordnet, dass die diesen Lösungen zugeordneten Beschriftungsbereiche 18 verklebt sind, bevor der Anwender die Lösungen YYY erkennen kann.

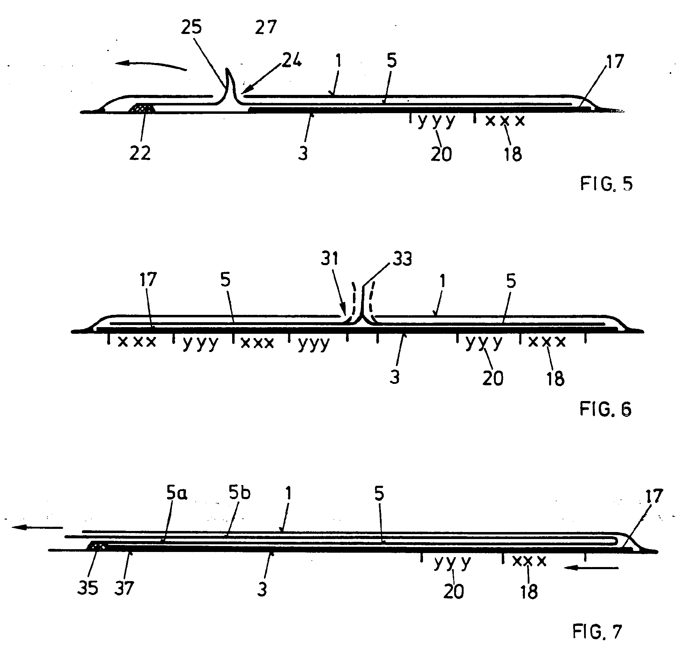

Wird der erfindungsgemässe Aufzeichnungsträger ohne weitere Vorkehrungen gemäss den Fig. 1 oder 2 realisiert, so besteht noch keine absolute Sicherheit darüber, dass der Anwender die Vorab-Information in den Feldern 20 gemäss Fig. 4 nicht durch Anheben des Blattes 1 gemäss Fig. 3 einsehen kann, bevor er seine Aufzeichnung im Feld 18 vornimmt. In den Fig. 5 bis 7 sind nun, ausgehend von den Ausführungsbeispielen gemäss den Fig. 1 bis 4, Ausbildungsvarianten, bevorzugte, wie für den erwähnten Einsatz als Aufgabenlösungsblätter, dargestellt, die ein Einsehen der Vorab-Information so lange verunmöglichen, als die Zwischenblattanordnung einen zu beschriftenden zugeordneten Abschnitt noch nicht freigegeben hat und letztere noch nicht verklebt ist.

Gemäss Fig. 5 sind die beiden Blätter 1 und 3 an ihren vier Kanten miteinander verbunden. Zwischen den Blättern 1 und 3 ist die Zwischenblattanordnung 5 eingelegt und, wie bei 22 dargestellt, im Bereiche der einen Blattkante mit mindestens einem der Blätter, hier mit Blatt 3, verbunden, wie verklebt. Das eine der beiden Blätter, Blatt 1, weist einen Auszugsschlitz 24 auf, aus welchem eine quer ausgedehnte Partie 25 der Zwischenblattanordnung 5 auskragt. Ein zu beschriftendes Feld 18 und ein Feld 20 mit auf dem Blatt 3 innen vorab vorgesehener Information Y, wie einer Musterlösung, sind relativ zueinander so angeordnet, dass das Feld 18 für die Aufzeichnung X bezüglich der ihm zugeordneten Vorab-Information Y, im Feld 20, näher dem Randbereich, der der Verbindung 22 gegenüberliegt, angeordnet ist. Eine Einsichtnahme in die Information Y im Feld 20 ist bei der dargestellten Anordnung so lange unmöglich, als die Zwischenblattanordnung 5 diesen Bereich abdeckt, somit auch Bereich 18. Ist die Aufzeichnung X im Feld 18 beendet, so wird die Zwischenblattanordnung 5 durch Ergreifen des Kragens 25 in Pfeilrichtung ausgezogen, gibt erst das Feld 18 frei, worauf der Haftbereich 17 die beiden Blätter 1 und 3 bereits verklebt und dort unlösbar verbindet. Erst dann wird das Feld 20 mit der Vorab-Information Y freigegeben. Stimmt die in Feld 18 eingetragene Lösung z.B. nicht mit der Lösung im Feld 20 überein, so ist eine Korrektur im Feld 18 nicht mehr möglich, denn die Zwischenblattanordnung 5 kann nicht mehr dorthin zurückgeschoben werden. Zur Auszugshilfe am Kragen 25 kann dabei, wie bei 27 dargestellt, ein Verstärkungselement, wie ein dünner Draht, quer zur Zwischenblattanordnung 5 angebracht, wie eingearbeitet, vorgesehen sein. Ist die Wirkverbindung zum Erzeugen des Aufzeichnungskontrastes, wie in Fig. 1 dargestellt, ausgebildet, so wird bevorzugterweise die Karbonisierung 15 gemäss Fig. 1 nur in dem für die Aufzeichnung XXX vorgesehenen Bereich angebracht.

In Fig. 6 ist eine weitere Ausführungsvariante des erfindungsgemässen Aufzeichnungsträgers dargestellt, prinzipiell wiederum wie in Fig. 1 oder 2 dargestellt aufgebaut, bei welcher verhindert wird, dass vorab vorgesehene Information Y zu Unzeit eingesehen werden kann. Im Unterschied zur Ausführungsvariante gemäss Fig. 5 weist hier das Blatt 1 in seinem Mittenbereich einen Auszugsschlitz 31 auf, und die Zwischenblattanordnung 5, mit einem ausragenden Auszugskragen 33, erstreckt sich, ausgehend von diesem Schlitz 31, beidseitig zwischen den Blättern 1 und 3. Die Zwischenblattanordnung 5 ist hier vorzugsweise nirgends mit einem der Blätter 1 bzw. 3 verbunden. Die Anordnung eines Aufzeichnungsfeldes 18 bezüglich eines Feldes 20 mit Vorab-Information ist gleich, wie bereits anhand von Fig. 5 erläutert wurde. Auch hier ist ein Einsehen der Information in Feld 20, bevor eine Aenderung der Aufzeichnung im Feld 18 durch Wirkung der Klebeschicht 17 verhindert wird, nicht möglich. Linkerhand dieser Figur ist beispielsweise dargestellt, wie die Abfolge von Aufzeichnungsfeldern und Feldern mit zugeordneter Vorab-Information ausgelegt wird, angedeutet durch die Indexierung 1 bzw. 2.

In Fig. 7 ist eine dritte, bevorzugte Variante dargestellt, bei der verhindert wird, dass vorab vorgesehene Information Y in einem Feld 20 eingesehen werden kann, bevor Aufzeichnungsinformation X in einem Feld 18 nicht mehr geändert werden kann. Hier sind die Blätter 1 und 3 wiederum entlang dreier Kanten miteinander verbunden. Die Zwischenblattanordnung 5 ist im offenbleibenden Randbereich mit einem der Blätter, wie bei 35 dargestellt, verbunden, wie verklebt, und ragt zwischen den Blättern 1 und 3 bis zum gegenüberliegenden Randbereich mit einem unteren Blatt 5a ein. Das untere Blatt 5a ist, wie bereits anhand der Fig. 1 und 2 erläutert wurde, so ausgebildet, dass es an der Klebeschicht 17 nicht klebt, ist beispielsweise silikonisiert. Im der Verklebung 35 abgekehrten Randbereich geht das Blatt 5a in ein oberes Blatt 5b über, welches wieder zum offenen Randbereich der beiden Blätter 1 und 3 zurückläuft. Dieses obere Blatt 5b ist dabei vorzugsweise ein Karbonpapier. Dieses obere Blatt 5b bildet nun ein Auszugselement, mit dessen Hilfe die gesamte Zwischenblattanordnung 5a, 5b zwischen den Blättern 1 und 3 hervorgezogen werden kann, unter gleichzeitiger Aktivierung der Klebeschicht 17. Bevorzugterweise ist dabei das untere Blatt 5a stärker als die übrigen Blätter ausgebildet, trotzdem selbstverständlich ausziehbar, und bildet eine Schreibunterlage für Schreibhandlungen auf Blatt 1. Es ist dabei durchaus möglich, auch die dem Blatt 1 zugewandte Seite einer Zwischenblattanordnung mit nur einem Blatt gemäss 5a zu karbonisieren und den Klebebereich 35, wie bei 37 dargestellt, abreissbar zu gestalten, womit einerseits wiederum ein Einsehen in das Feld 20 zu Unzeiten verhindert wird, anderseits, durch Abreissen im Bereich 37, das dann einzige Blatt 5a der Zwischenblattanordnung 5 von Blatt 3 gelöst und ausgezogen werden kann. Auch hier kann die Wirkverbindung, wie in Fig. 1 oder wie in Fig. 2 dargestellt ist, realisiert sein, und es können bei allen dargestellten Varianten gemäss den Fig. 5 bis 7 der Aufzeichnungsträger als Doppelaufzeichnungsträger, wie bereits im Zusammenhang mit den Fig. 1 und 2 erläutert wurde, ausgebildet sein.

Zur Verhinderung, dass auf dem Blatt 3 vorab vorgesehene Information zu Unzeit eingesehen werden kann, können, bei einer Doppelausführung, wie gestrichelt in den Fig. 1 und 2 dargestellt ist, die Zwischenblattanordnungen auch verbunden werden, wie bei 40 dargestellt.

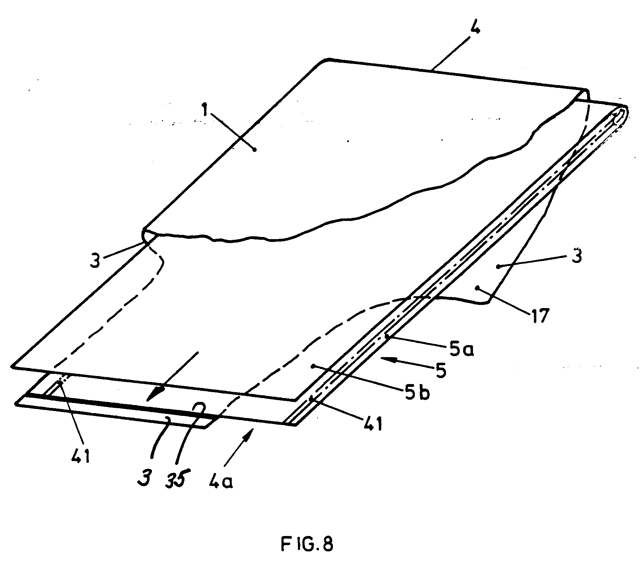

In Fig. 8 ist die Ausführungsvariante gemäss Fig. 7 nochmals dargestellt. Um zu erreichen, dass durch Zug auf Blatt 5b auch das Blatt 5a in genau erwünschtem Mass ausgezogen werden kann, sind Vorkehrungen zu treffen, damit Blatt 5a wenigstens nahezu parallel zum Rand 4 rückgezogen wird, der dem offenen Rand 4a gegenüberliegt. Dies wird gemäss Fig. 8 durch Vorsehen von leicht klebenden Streifen 41 erreicht, entlang welchen das Blatt 5a am Blatt 3 leicht klebt, trotzdem ohne weiteres, durch Zug an Blatt 5b, ausgezogen werden kann. Diese Klebestreifen 41 sichern den erwähnten parallelen Auszug.

## Patentansprüche

1. Aufzeichnungsträger mit mindestens zwei flach aufeinandergelegten Blättern (1, 3), die entlang wesentlicher Randabschnitte zu einer Tasche verbunden sind, mit einer aus einer Oeffnung der Tasche ausziehbaren Zwischenblattanordnung (5), welche die Tasche in zwei Zwischenkammern (7) unterteilt, wobei die Wirkverbindung mindestens eines der Blätter (1, 3) mit der Zwischenblattanordnung (5) einen Aufzeichnungskontrast (13) bewirkt, weiter mit einer Haftschicht (17) in einem vorgegebenen Bereich entlang der Auszugbahn der Zwischenblattanordnung (5), welche Schicht (17) mindestens an bezüglich der Ausziehbewegung stromauf gelegenen Partien der Zwischenblattanordnung (5) und an in dem genannten Bereich gelegenen Zwischenblattanordnungspartien wesentlich weniger haftet als an sich gegenüberliegenden Seiten der zwei Blätter (1, 3), derart, dass die Schicht (17) nach Entfernen der Zwischenblattanordnung (5) vom genannten Bereich einen Taschenabschnitt verschliesst, wobei die Zwischenblattanordnung (5) beim Herausziehen über die Haftschicht (17) gleitet, dadurch gekennzeichnet, dass die Haftschicht (17) in einem Bereich in der einen Zwischenkammer (9) liegt, die Wirkverbindung, die den Aufzeichnungskontrast (13) bewirkt, in einem Bereich der anderen Zwischenkammer (7) besteht, der sich mindestens teilweise mit dem Haftschichtbereich überdeckt.

2. Aufzeichnungsträger nach Anspruch 1, dadurch gekennzeichnet, dass die Aussenseite des die andere Zwischenkammer bildenden Blattes (1) zur mindestens teilweisen Verhinderung des Aufbringens eines Aufzeichnungskontrastes von aussen ausgebildet ist, wie beispielsweise oberflächenbehandelt, z.B. plastifiziert ist.

3. Aufzeichnungsträger nach einem der Ansprüche 1 oder 2, dadurch gekennzeichnet, dass auf mindestens einem (3) der zwei Blätter (1,3) Information (y) voraufgebracht ist, wobei die Zwischenblattanordnung (5) diese gegen aussen mindestens uninterpretierbar macht, vorzugsweise abdeckt.

4. Aufzeichnungträger nach einem der Ansprüche 1 bis 3, dadurch gekennzeichnet, dass mindestens ein als solches bezeichnetes Aufzeichnungsfeld (x) vorgesehen ist und die Haftschicht (17) so angeordnet ist, dass nach Entfernen der Zwischenblattanordnung (5) aus dem Ausfzeichnungsfeldbereich (x) ihr Wiedereinbringen mindestens in dieses Aufzeichnungsfeld (x) verunmöglicht ist.

5. Aufzeichnungsträger nach einem der Ansprüche 1 bis 4, dadurch gekennzeichnet, dass auf mindestens einem der zwei Blätter (1,3) Information (y) voraufgebracht ist und dass die Zwischenblattanordnung (5) derart angeordnet ist, dass ein Einsehen der vorab vorgesehenen Information (y) nur möglich ist, wenn vorgängig die Schicht (17) von der Zwischenblattanordnung (5) freigegeben ist und ein Wiedereinschieben der Zwischenblattanordnung (5) in ein der Information (y) zugeordnetes, als solches bezeichnetes Aufzeichnungsfeld (x) verhindert.

6. Aufzeichnungsträger nach einem der Ansprüche 1 bis 5, dadurch gekennzeichnet, dass die zwei Blätter (1,3) an drei Kanten (4) verbunden sind und dass die Zwischenblattanordnung (5) an der vierten Kante (4a) mit einem der Blätter (3) verbunden ist und dass vorzugsweise an diesem Blatt (3) Information (y) voraufgebracht ist, womit verhindert wird,-dass die Information (y) vor Entfernen der Zwischenblattanordnung (5) einsehbar ist.

7. Aufzeichnungsträger nach Anspruch 6, dadurch gekennzeichnet, dass die Zwischenblattanordnung (5) ein Ausziehorgan (5b) umfasst, welches im Bereiche des mit dem einen der Blätter (3) verbundenen Randes (4a) der Zwischenblattanordnung (5) abgekehrten Randes dieser Anordnung (5) verbunden ist und im Bereich der Öffnung zugreifbar ist.

8. Aufzeichnungsträger nach Anspruch 7, dadurch gekennzeichnet, dass das Ausziehorgan ein Kontrast bewirkendes Blatt, vorzugsweise ein Kohlepapier (5b) an der Zwischenblattanordnung (5) ist.

9. Aufzeichnungsträger nach einem der Ansprüche 1 bis 5, dadurch gekennzeichnet, dass die zwei Blätter (1,3) an ihren vier Rändern miteinander verbunden sind und mindestens am einen der Blätter (1) ein Auszugsschlitz (24) vorgesehen ist zur Entfernung der Zwischenblattanordnung (5).

10. Aufzeichnungsträger nach Anspruch 9, dadurch gekennzeichnet, dass Information (y) auf dem nicht mit dem Auszugsschlitz versehenen Blatt (3) voraufgebracht ist, die durch die Zwischenblattanordnung (5) nicht einsehbar ist.

11. Aufzeichnungsträger nach einem der Ansprüche 1 bis 10, dadurch gekennzeichnet, dass die Schicht (17) sich im wesentlichen kontinierlich entlang der einen Seite des einen der zwei Blätter (3) erstreckt, vorzugseise streifenförmig.

12. Aufzeichnungsträger nach einem der Ansprüche 1 bis 11, dadurch gekennzeichnet, dass drei übereinander verbundene Blätter (1,3,1) vorgesehen sind, mit zwei dazwischenliegenden Zwischenblattanordnungen (5), wobei das mittlere (3) der drei übereinander verbundenen Blätter auf seinen beiden Seiten je die Haftschicht (17) aufweist und die beiden Zwischenblattanordnungen ggf. verbunden (40) sind.

13. Aufzeichnungsträger nach einem der Ansprüche 1 bis 12, dadurch gekennchntet, dass die Zwischenblattanordnung (5) eine der Haftschicht (17) zugewandte silikonisierte Seite (5a) umfasst.

14. Aufzeichnungsträger nach einem der Ansprüche 1 bis 13, dadurch gekennzeichnet, dass die Zwischenblattanordnung ein Blatt (5a) umfasst, das ein Durchdrücken beim Schreiben und/oder Zeichnen mindestens weitgehend verhindert.

15. Aufzeichnungsträger nach einem der Ansprüche 1 bis 14, dadurch gekennzeichnet, dass das eine (1) der zwei Blätter, ein- oder beidseitig, randständige Klebebereiche aufweist, die sich vorzugsweise entlang des ganzen Bereiches erstrecken und dass das andere (3) der zwei Blätter mittels dieser randständigen Klebebereiche mit dem einen Blatt (1) an mindestens zwei Rändern verbunden ist.

16. Aufzeichnungsträger nach einem der Ansprüche 8 bis 15, dadurch gekennzeichnet, dass Klebestreifen (41) zwischen der Zwischenblattanordnung (5a) und dem einen der zwei Blätter (1) vorgesehen sind.

## Claims

1. A record support having at least two sheets (1, 3) laid flat on one another, which are joined to form a pocket along substantial edge sections, with an intermediate sheet arrangement (5) which can be drawn out of an opening in the pocket, which arrangement divides the pocket into two intermediate chambers (7), the operative connection of at least one of the sheets (1, 3) with the intermediate sheet arrangement (5) bringing about a recording contrast (13), furthermore with an adhesive layer (17) in a given region along the path of withdrawal of the intermediate sheet arrangement (5), which layer (17) adheres substantially less strongly at least to parts of the intermediate sheet arrangement (5) which are upstream with respect to the withdrawal movement and to parts of the intermediate sheet arrangement located in the afore-mentioned region than to opposing sides of the two sheets (1, 3), in such a manner that the layer (17), once the intermediate sheet arrangement (5) has been removed from the aforementioned region, closes off a pocket section, the intermediate sheet arrangement (5) sliding across the adhesive layer (17) upon withdrawal, characterised in that the adhesive layer (17) is located in a region in one intermediate chamber (9), the operative connection, which brings about the recording contrast (13), consists in a region of the other intermediate chamber (7) which is at least partially covered by the region of the adhesive layer.

2. A record carrier according to Claim 1, characterised in that the outside of the sheet (1) forming the other intermediate chamber is designed, such as surface-treated, for instance plasticised, in order to hinder the application of a recording contrast at least partially from outside.

3. A record carrier according to one of Claims 1 or 2, characterised in that information (y) is pre-applied to at least one (3) of the two sheets (1, 3), the intermediate sheet arrangement (5) at least rendering said information impossible to interpret from outside, and preferably covering said information from the outside.

4. A record carrier according to one of Claims 1 to 3, characterised in that at least one record space (x) which is designated as such is provided and the adhesive layer (17) is arranged such that once the intermediate sheet arrangement (5) has been removed from the region of the record space (x) the reinsertion thereof at least into said record space (x) is rendered impossible.

5. A record carrier according to one of Claims 1 to 4, characterised in that information (y) is pre-applied to at least one (3) of the two sheets (1, 3) and that the intermediate sheet arrangement (5) is arranged in such a manner that it is possible to look at the information (y) previously provided only if the layer (17) is previously released from the intermediate sheet arrangement (5) and prevents reinsertion of the intermediate sheet arrangement (5) into a record space (x) associated with the information (y) and designated as such.

6. A record carrier according to one of Claims 1 to 5, characterised in that the two sheets (1, 3) are joined on three edges (4) and that the intermediate sheet arrangement (5) is joined to one of the sheets (3) on the fourth edge (4a) and that preferably information (y) is pre-applied to said sheet (3), which prevents the information (y) being able to be looked at before the intermediate sheet arrangement (5) is removed.

7. A record carrier according to Claim 6, characterised in that the intermediate sheet arrangement (5) comprises a withdrawal element (5b) which is joined to the remote edge with respect to the region of the edge (4a) of the intermediate sheet arrangement (5) joined to one of the sheets (3) and can be grasped in the region of the opening.

8. A record carrier according to Claim 7, characterised in that the withdrawal element is a sheet which produces a contrast, preferably a carbon paper (5b) on the intermediate sheet arrangement (5).

9. A record carrier according to one of Claims 1 to 5, characterised in that the two sheets (1, 3) are joined together at their four edges and an extraction slit (24) is provided at least on one of the sheets (1) for removing the intermediate sheet arrangement (5).

10. A record carrier according to Claim 9, characterised in that information (y) is pre-applied to the sheet (3) not provided with the extraction slit, which information cannot be looked at through the intermediate sheet arrangement (5).

11. A record carrier according to one of Claims 1 to 10, characterised in that the layer (17) runs substantially continuously along one side of one (3) of the two sheets, preferably in strip form.

12. A record carrier according to one of Claims 1 to 11, characterised in that three sheets (1, 3, 1) joined one above the other are provided, with two intervening intermediate sheet arrangements (5), the middle one (3) of the three sheets joined one above the other having the adhesive layer (17) on each of its two sides and the two intermediate sheet arrangements optionally being connected (40).

13. A record carrier according to one of Claims 1 to 12, characterised in that the intermediate sheet arrangement (5) comprises a silicone-treated side (5a) facing the adhesive layer (17).

14. A record carrier according to one of Claims 1 to 13, characterised in that the intermediate sheet arrangement comprises a sheet (5a) which at least largely prevents imprints being left upon writing and/or drawing.

15. A record carrier according to one of Claims 1 to 14, characterised in that one (1) of the two sheets has marginal adhesive regions on one or both sides, which regions preferably run along the entire region and that the other (3) one of the two sheets is joined to the one sheet (1) on at least two edges by means of these marginal adhesive regions.

16. A record carrier according to one of Claims 8 to 15, characterised in that adhesive strips (41) are provided between the intermediate sheet arrangement (5a) and one of the two sheets (1).

**Revendications**

1. Support d'inscription comportant au moins deux feuilles (1, 3) posées à plat l'une sur l'autre et reliées en une poche le long de sections de bord sensibles, et un dispositif de feuille intercalaire (5) qui est apte à être arraché d'une ouverture de ladite poche et qui divise cette dernière en deux chambres intermédiaires (7), la liaison fonctionnelle entre l'une au moins des feuilles (1, 3) et le dispositif de feuille intercalaire (5) provoquant un contraste d'inscription (13), et comportant également une couche adhésive (17) dans une zone prédéfinie, le long de la bande d'arrachement du dispositif de feuille intercalaire (5), laquelle couche (17) adhérant sensiblement moins, au moins au niveau de parties du dispositif (5) situées en amont par rapport au mouvement d'arrachement, et de parties du dispositif de feuille intercalaire situées dans ladite zone, qu'au niveau de côtés des deux feuilles (1, 3) se faisant face, de sorte que la couche (17) ferme une section de poche une fois que le dispositif de feuille intercalaire (5) a été enlevé de ladite zone, moyennant quoi la feuille intercalaire (5) glisse, lors de l'arrachement, sur la couche adhésive (17), caractérisé en ce que la couche adhésive (17) se trouve dans une zone située dans la première chambre intermédiaire (9) et la liaison fonctionnelle qui provoque le contraste d'inscription (13) a lieu dans une zone de la seconde chambre intermédiaire (7) qui couvre au moins partiellement la zone de la couche adhésive.

2. Support d'inscription selon la revendication 1, caractérisé en ce que la face extérieure de la feuille (1) définissant la seconde chambre intermédiaire est conçue pour empêcher au moins partiellement l'application, de l'extérieur, d'un contraste d'inscription, et a subi par exemple un traitement de surface tel qu'une plastification.

3. Support d'inscription selon l'une des revendications 1 ou 2, caractérisé en ce qu'une information (y) est appliquée préalablement sur l'une (3) au moins des deux feuilles (1, 3), le dispositif de feuille intercalaire (5) rendant ladite information au moins inapte à être interprétée, de l'extérieur, et la couvrant de préférence.

4. Support d'inscription selon l'une des revendications 1 à 3, caractérisé en ce qu'il est prévu au moins une zone d'inscription (x) désignée comme telle, et la couche adhésive (17) est disposée de telle sorte que le dispositif de feuille intercalaire (5), une fois qu'il a été enlevé de la zone d'inscription (x), ne peut pas être réintroduit au moins dans celle-ci.

5. Support d'inscription selon l'une des revendications 1 à 4, caractérisé en ce qu'une information (y) est appliquée préalablement sur l'une au moins des deux feuilles (1, 3), et en ce que le dispositif de feuille intermédiaire (5) est disposé de telle sorte que l'information prévue (y) ne puisse être vue que si la couche (17) est d'abord libérée du dispositif de feuille intercalaire (5) et empêche de ré-introduire celui-ci dans une zone d'inscription (x) désignée comme telle et associée à l'information (y).

6. Support d'inscription selon l'une des revendications 1 à 5, caractérisé en ce que les deux feuilles (1, 3) sont reliées au niveau de trois bords (4), en ce que le dispositif de feuille intercalaire (5) est relié, au niveau du quatrième bord (4a), à l'une des feuilles (3) et en ce qu'une information (y) est appliquée préalablement au niveau de cette feuille (3), de préférence, ce qui empêche que l'information (y) soit visible avant que le dispositif de feuille intercalaire (5) ne soit enlevé.

7. Support d'inscription selon la revendication 6, caractérisé en ce que le dispositif de feuille intercalaire (5) comprend un organe d'arrachement (5b) qui est relié, dans la zone du bord (4a) du dispositif de feuille intercalaire (5) relié à l'une des feuilles (3), au bord opposé dudit dispositif (5), et est apte à être saisi dans la zone de l'ouverture.

8. Support d'inscription selon la revendication 7, caractérisé en ce que l'organe d'arrachement consiste en une feuille provoquant un contraste, de préférence en un papier carbone (5b), au niveau du dispositif de feuille intercalaire (5).

9. Support d'inscription selon l'une des revendications 1 à 5, caractérisé en ce que les deux feuilles (1, 3) sont reliées entre elles au niveau de leurs quatre bords et qu'il est prévu, au moins au niveau de l'une des feuilles (1), une fente d'arrachement (24) en vue d'enlever le dispositif de feuille intercalaire (5).

10. Support d'inscription selon la revendication 9, caractérisé en ce qu'il est prévu une information (y) qui est appliquée préalablement sur la feuille (3) non pourvue de la fente d'arrachement, et qui n'est pas visible à travers le dispositif de feuille intercalaire (5).

11. Support d'inscription selon l'une des revendications 1 à 10, caractérisé en ce que la couche (17) s'étend de façon sensiblement continue le long d'une des faces de l'une des deux feuilles (3), de préférence en forme de bande.

12. Support selon l'une des revendications 1 à 11, caractérisé en ce qu'il est prévu trois feuilles (1, 3, 1) reliées les unes sur les autres, avec, placés entre elles, deux dispositifs de feuille intercalaire (5), celle (3) des trois feuilles reliées les unes sur les autres qui se trouve au milieu présentant sur ses deux faces la couche adhésive (17), et les deux dispositifs de feuille intercalaire étant éventuellement reliés (40).

13. Support d'inscription selon l'une des revendications 1 à 12, caractérisé en ce que le dispositif de feuille intercalaire (5) comprend une face (5a) traitée au silicone tournée vers la couche adhésive (17).

14. Support d'inscription selon l'une des revendications 1 à 13, caractérisé en ce que le dispositif de feuille intercalaire comprend une feuille (5a) qui empêche au moins sensiblement un enfoncement lors de l'écriture et/ou du dessin.

15. Support d'inscription selon l'une des revendications 1 à 14, caractérisé en ce que l'une (1) des deux feuilles possède, sur une ou deux faces, des zones de collage, situées sur les bords, qui s'étendent de préférence le long de toute la zone, et en ce que la seconde feuille (3) est reliée à la première (1), au niveau d'au moins deux bords, à l'aide de ces zones de collage situées sur les bords.

16. Support d'inscription selon l'une des revendications 8 à 15, caractérisé en ce qu'il est prévu des bandes de collage (41) entre le dispositif de feuille intercalaire (5a) et l'une des deux feuilles (1).

FIG.1

FIG. 2

FIG. 3

FIG. 4a

FIG. 4b

FIG. 4c

FIG. 5

FIG. 6

FIG. 7

FIG. 8